Europäisches Patentamt

European Patent Office

Office européen des brevets

(19)

(11) EP 0 743 112 A1

(12) **EUROPEAN PATENT APPLICATION**

(43) Date of publication:
20.11.1996 Bulletin 1996/47

(51) Int Cl.⁶: **B21D 53/26**

(21) Application number: 96303365.9

(22) Date of filing: 14.05.1996

(84) Designated Contracting States:
**BE DE ES FR GB IT**

(30) Priority: **17.05.1995 US 443124**

(71) Applicant: **METAL FORMING MACHINES, INC.**
**El Segundo, California 90245 (US)**

(72) Inventor: **Korte, Helmut,**
**c/o Metal Forming Machines, Inc.**
**El Segundo, California 90245 (US)**

(74) Representative: **Dean, John Paul et al**
**Withers & Rogers**
**4 Dyer's Buildings**
**Holborn**
**London EC1N 2JT (GB)**

(54) **Apparatus and method for manufacturing a vehicle wheel**

(57) A method and apparatus for forming vehicle wheels (10) comprising the steps of forming a rim pre-form (100), mounting a wheel center portion (30) to the pre-form, mounting the center portion and rim pre-form unit to a processing machine (200) in which the center portion and rim pre-form are maintained in the orientation which would be accomplished during use of the vehicle wheel and forming a portion of the rim pre-form.

F I G. 4

## Description

### Background Of The Invention

The present invention relates to an apparatus and method for manufacturing vehicle wheels, in which a center portion is attached to a rim pre-form and then a portion of the wheel rim is reduced in width while center portion and rim pre-form unit is mounted on an apparatus simulating a vehicle mounting.

Vehicle wheels typically have three basic component parts: a rim, a center portion and a tire. The rim provides the generally cylindrical surface on which the tire is mounted. In use, the tire provides a contact surface which provides an interface with the ground. The center portion typically is welded, or otherwise attached to the rim such that it is situated perpendicularly to the tire surface and within the center area of the cylindrical rim. The rim typically has an three significant dimensions, a bead seat radius, an axial depth and a radial thickness. The surfaces of the rim typically have a standard contour set, for example, by vehicle manufacturers or the Tire and Rim Association, and provide a bead seat location in order to accommodate industry standard tires. The thickness is the distance between the inner and outer surfaces of the rim.

It is desirable to construct a rim such that its thickness is greater at points bearing radial loads -- such as at the bead seats where the tire is in contact with the rim -- and thinner in areas that typically do not bear radial loads or that bear smaller such loads, such as between the bead seats. Reducing the thickness where load bearing capacity can be reduced can result in a lighter weight rim and in lower material costs.

One known method of producing such reduced-thickness rims is to use a casting process in which the mold defines a thinner section at the desired locations.

Another known method of producing reduced-thickness rims is to form the rim and then machine the rim in order to remove material at the desired locations. Material is lost in the machining process.

Another known method for producing a reduced thickness vehicle rim is illustrated in United States Patent No. 4,962,587. In that method, a rim blank with an axial depth that is smaller than the ultimate axial depth is formed, such as in accordance with U.S. Patent No. 4,185,370. Then, the rim blank is stretched by spinning, in order to produce a section with a reduced thickness. In practice, this method suffers the disadvantage of an increased likelihood of producing a rim which is misaligned with the center portion, which ultimately must be welded to the rim. Misalignment can cause a vehicle using the wheel to ride or steer improperly. In order to achieve a proper alignment after the center portion is welded onto the rim, it can be often necessary to perform supplemental machining or forming in order to reduce or eliminate the misalignments.

### Summary Of The Invention

The present invention alleviates to a great extent the disadvantages of the known methods and machines for forming reduced thickness wheel rims by providing a method and apparatus for forming a pre-aligned reduced thickness vehicle wheel. In particular, a rim pre-form is formed. The rim pre-form has an axial depth which is smaller than the ultimate axial depth and a radius which is close to the ultimate radius. Then, the center portion of the wheel is attached to the rim pre-form in the position desired for ultimate use of the vehicle wheel. Any method of attaching can be used, such as, for example, welding. Likewise, the rim pre-form can be manufactured with the center portion attached, such as through a casting or forming process. Then, the rim pre-form with attached center portion are placed into a spin forming machine in which the center portion is mounted onto the machine in the position it would be mounted on the axle of a vehicle in ultimate use. For example, a post having a similar radial dimension as an axle is inserted into the receiving aperture in the center portion. Preferably, the center portion is centered within the tooling of a spin forming machine and is clamped in place. A forming process is then applied to the vehicle rim in order to stretch a desired portion of the rim in the axial direction, thereby producing a vehicle rim with a portion having reduced thickness. Any forming process can be used to achieve this, such as shear forming, metal spinning or spin forming. The term "spin forming" is used herein to refer to shear forming, flow forming, metal spinning and spin forming collectively.

It is therefore an advantage of the present invention that a reduced thickness vehicle rims can be formed while attached to the center portion. The reduced thickness section is formed while the rim is in the orientation of ultimate use. It is thus a further advantage of the present invention to provide reduced thickness vehicle rims which are well balanced. A processing after the formation of the rim is not required in order to properly align the wheel. Thus the using the apparatus and method of the present invention can result in a more economical and less time consuming manufacture of reduced thickness vehicle rims.

### Brief Description Of The Drawings

The above and other objects and advantages of the invention will be apparent upon consideration of the following detailed description, taken in conjunction with the accompanying drawings in which like reference characters refer to like parts throughout and in which:

FIG. 1 is a perspective view of a vehicle wheel rim and center portion which may be formed in accordance with the present invention;

FIG. 2 is a cross-sectional view of a vehicle wheel rim and center portion which may be formed in accordance with the present invention;

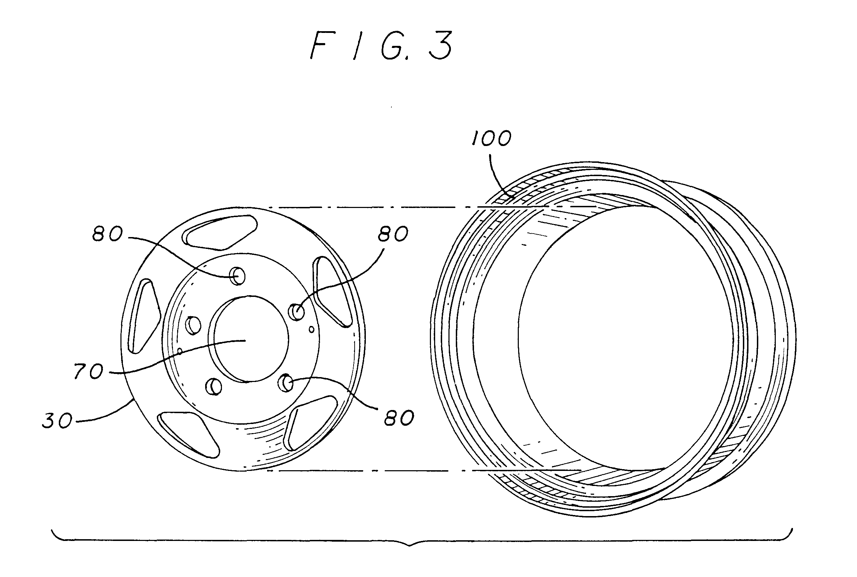

FIG. 3 is a perspective view of components of a vehicle wheel for use in accordance with the present invention;

FIG. 4 is a cross-sectional view of the apparatus of the present invention, illustrating a wheel rim pre-form and center portion mounted therein;

FIG. 5 is a cross-sectional view of a portion of the apparatus of FIG. 4, illustrating a stretched wheel rim and center portion mounted therein;

FIG. 6 is a cross-sectional view of a portion of the apparatus of FIG. 4, illustrating a wheel rim pre-form and center portion mounted therein; and

FIG. 7 is a cross-sectional view of a portion of the apparatus of FIG. 4, illustrating a stretched wheel rim and center portion mounted therein.

Detailed Description Of The Invention

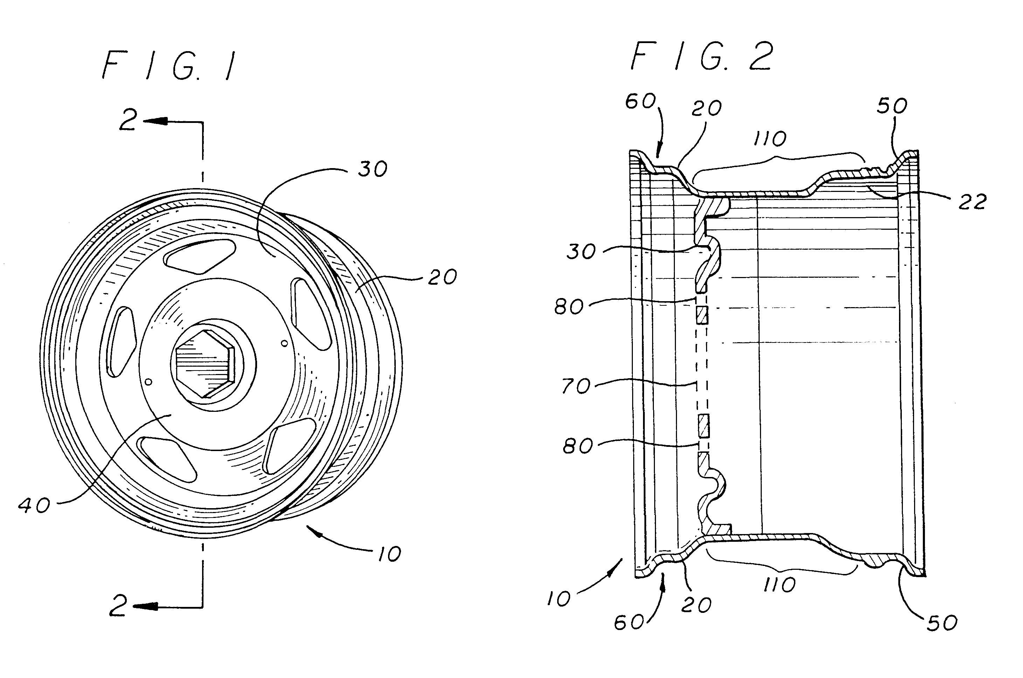

FIG. 1 is a perspective view of a vehicle wheel 10 which is fabricated in accordance with the present invention. The wheel 10 includes a generally cylindrical rim 20 a center portion 30 and a decorative cap 40. The rim 20 may have any desired surface contour. However, the contour of the rim typically is dictated by the demands of purchasers. For example, the automobile industry typically requires a particular rim cross-sectional profile which will properly receive an inflatable automobile tire. In such automotive vehicle wheels, bead seats 50, 60 are provided at the respective ends of the rim, as shown in FIG. 2. In such vehicle wheels, vehicle weight is received by the vehicle wheel through the vehicle's axle.

The axle is mounted into an axle receiving aperture 70 in the center portion 30 of the wheel. In addition the vehicle wheel can be secured to the vehicle using mounting bolts which may be inserted through receiving apertures 80, which preferably are defined in the center portion of the wheel radially outwardly from the axle receiving aperture 70. Lug nuts (not shown) may be screwed onto the mounting bolts in order to secure the center portion 30 to the bolts and vehicle. The vehicle weight is then borne by the vehicle wheel through the transference of radial loads from the axle to the portion of the center portion 30 to which the axle is mounted. The radial loads also typically are transmitted through the center portion 30 to the regions of the rim 20 which are in contact with the center portion 30. The loads of the vehicle rim are transmitted to the tire at the points of contact of the tire (not shown) with the rim 20. These points of contact typically are situated in the regions of the bead seats 50, 60.

Any construction of the bead seat locations 50, 60 may be used, as long as they are strong enough to withstand the loads from the mounted tire without failing. This may be accomplished by constructing the rim 20 so that its material thickness, as measured from the inside surface 22 to the outside surface 24, is sufficient to provide the strength necessary. The desired thickness will depend upon the particular material selected. The vehicle rim may be formed of any material that can bear the desired loads. For example, the rim may be formed of metallic materials, such as steel, steel composite, aluminum, sheet materials, or forged or cast materials. Likewise any material can be selected for the center portion 30.

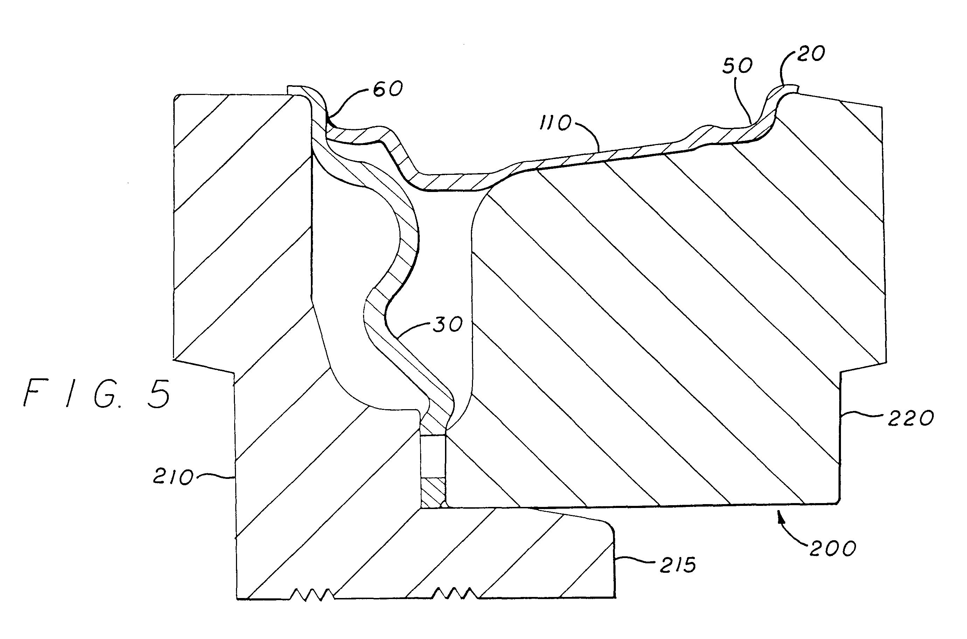

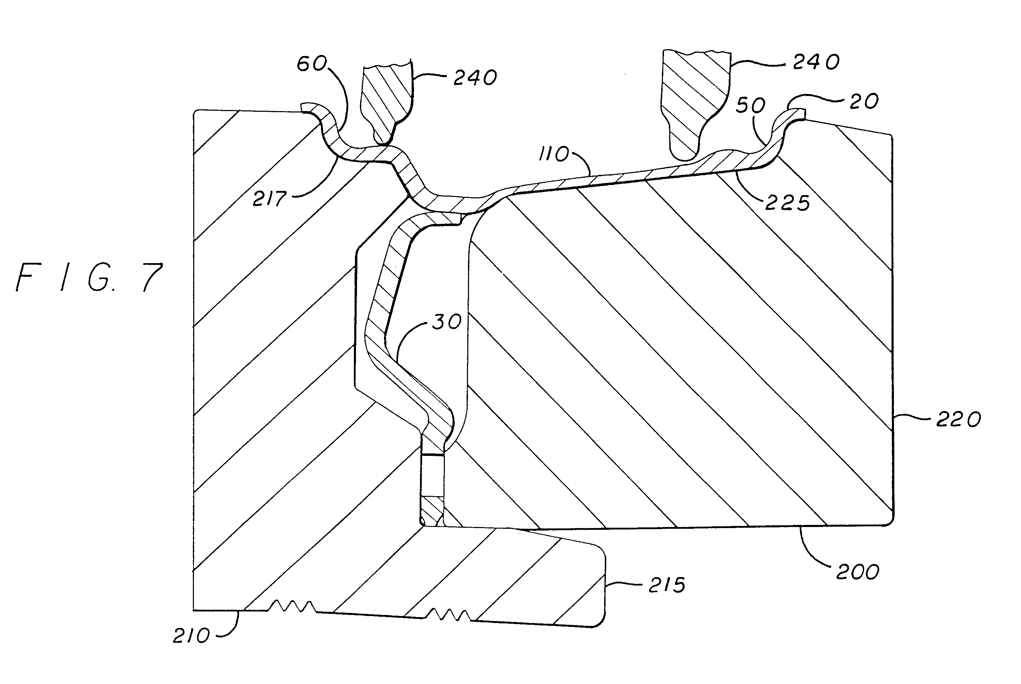

The center portion 30 may be formed by any method which will achieve a desired cross-sectional profile as well as desired structural strength. For example, the center portion 30 may be formed by machining a metallic billet, or by spinning, forging or casting. In one embodiment, the entire center portion 30 fits within the interior surface 22 of the rim 20, as illustrated in FIG. 7. Alternatively, the center section may include the outboard flange of the rim. This alternative embodiment is illustrated in FIG. 5.

The present invention provides a method and apparatus for ensuring that the regions of the rim 20 which receive greater loads achieve the necessary thickness (such as at the bead seats 50, 60), while other, less critical, regions of the rim, which bear loads that are less than those borne by the high strength regions can have a reduced thickness. This is be achieved by constructing a rim pre-form 100 and then performing additional processing in accordance with the invention.

The rim pre-form 100 may be formed by any process, such as by roll pressing or spin forming. This pre-form 100 preferably has a radial thickness (i.e. between inner surface 22 and outer surface 24) which is uniform throughout, however, there may also be variations if desired. The rim pre-form 100 may have any cross-sectional profile desired, as long as after subsequent forming operations it achieves the ultimately desired cross-sectional profile.

Subsequent operations are performed on the pre-form in order to thin out, or stretch, the portions of the pre-form 100 which correspond to the less-critical regions of the ultimate vehicle rim 20. For example, a reduced thickness region 110 may be formed between bead seats 50, 60. Such reduced thickness regions 110 are illustrated in FIGS. 2, 5 and 7.

In order to accomplish the thinning of the rim pre-form 100, the center portion 30 is first attached to the rim pre-form 100. The center portion 30 is attached at any desired location of the rim pre-form 100, as discussed above. Any process or method for attaching the center portion 30 to the rim pre-form 100 may be used. For example, the center portion 30 amy be welded to the rim pre-form 100 at the points of contact between their respective surfaces. Alternatively, the center portion 30 and the rim pre-form 100 may be formed together, such as by using a forging or casting process, in which case it is not necessary to attach the center portion to the rim pre-form as they are fabricated in one piece. Alternatively, the center portion 30 and rim pre-form 100 may be attached using hooks, snaps, bolts or other material connectors.

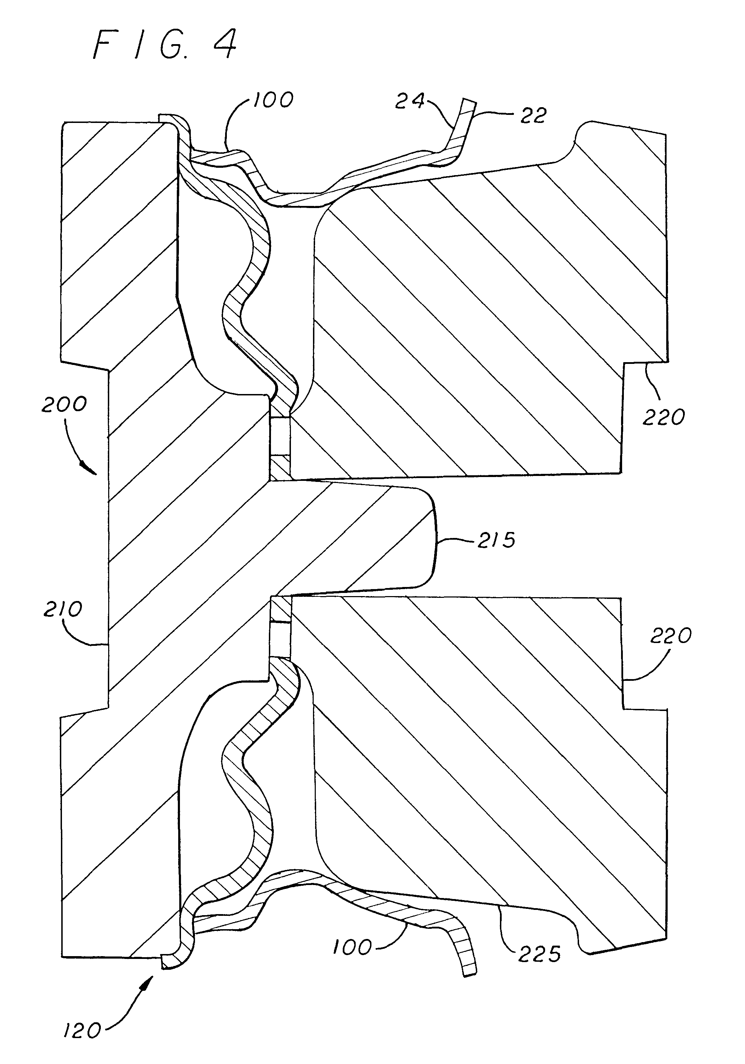

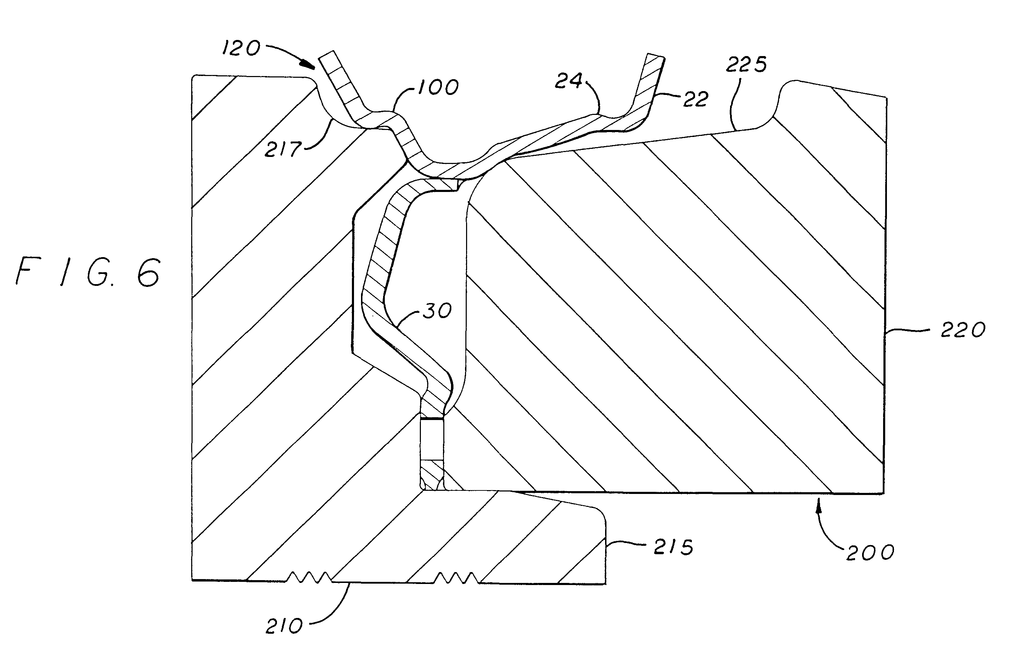

Once the center portion 30 and rim pre-form 100 are attached in the desired manner, the center portion and rim pre-form from an intermediate unit 120. Regardless of which of the above methods for attaching the center portion 30 to the rim pre-form 100, it is readily appreciated that the center portion 30 is attached to the rim pre-form 100 in the same orientation as the center portion 30 has with the rim 20 in the vehicle wheel being formed. In other words, the center portion 30 and preform 100 have the same orientation with respect to each other in the intermediate unit 120 as they have in the fully formed vehicle wheel. The center portion 30 is generally perpendicular to both the rim pre-form 100 and rim 20, which ultimately is formed form rim pre-form 100. This is illustrated in FIGS. 4 and 5 and FIGS. 6 and 7. In FIGS. 4 and 6 the respective center portions 30 are attached to the respective rim pre-forms 100. In FIGS. 5 and 7, the respective center portions 30 are attached to the respective formed rims 100.

The intermediate unit 120 is mounted into a forming machine 200 using a mounting apparatus providing sufficient retention force for retaining the unit 120 during subsequent forming operations.

The mounting apparatus preferably includes an axle mounting mandrel 210 and rim mounting mandrel 220. The axle mounting mandrel 210 includes a protruding post 215. The protruding post 215 fits into the axle receiving aperture 70 of the center portion 30. The post 215 is shaped so as to retain the mounted center portion 30 in the same orientation as the center portion (and attached wheel) would be in use on a vehicle. This allows the center portion 30 to readily be centered on the mandrel 210. The center portion 30 may be attached to the post 215 and axle mounting mandrel 210 by any means. Preferably, during the subsequent forming operations, the center portion 30 is retained in a generally fixed orientation with respect to the mounting post 215, such as by clamping. In the illustrated embodiment, the center portion 30 is retained in place by the axle mounting mandrel 210 and the rim mounting mandrel 220.

The rim mounting mandrel 220 preferably has an outer surface 225, with a contour matching the profile desired for the rim 20 that is formed. Likewise, in the embodiment illustrated in FIGS. 6 and 7, the axle mounting mandrel 210 has an outer surface 217 which also is contoured in order to match the profile of a portion of the rim 20 that is formed.

A forming operation is performed in order to shape the rim pre-form 100 into the fully formed rim 20. In a preferred embodiment, the rim pre-form is spin formed in order to cause the pre-form 100 to conform to the shape dictated by the outer surface 225 of the rim mounting mandrel 220 and/or the outer surface 217 of the axle mounting mandrel 210. In this forming operation, the thickness at least a portion of the pre-form 100 is reduced.

For example, the rim pre-form 100 illustrated in FIG.

4 initially does not conform to the shape of the surface 225 of rim mounting mandrel 220. After the forming operation, the rim 20 generally conforms to the shape of the surface 225, as illustrated in FIG. 5. In addition, the formed rim 20 has a reduced thickness region 110 between the bead seats 50, 60.

As another example, the rim pre-form 100 illustrated in FIG. 6 initially does not conform to the shape of the surfaces 217 and 225 of axle mounting mandrel 210 and rim mounting mandrel 220, respectively. After the forming operation, the rim 20 generally conforms to the shape of the surfaces 217 and 225, as illustrated in FIG. 7. In addition, the formed rim has a reduced thickness region 110 between the bead seats 50, 60.

FIG. 7 also illustrates a forming rollers 240, such as may be used in conjunction with the present invention in order to spin form, shear form, or flow form the rim 20. In operation, the axle and rim mounting mandrels 210, 220 are spun about an axis running through the center of the center portion 30, i.e. perpendicular to the plane defined by the axle receiving aperture 70. This causes the mounted wheel components, such as intermediate unit 120, to also spin. The forming roller 240 engages the mounted rim pre-form 100 and is advanced in the direction desired in order to force the pre-form to conform to the desired surface 217, 225. A variable radial force, in the direction of the center of the rim diameter (i.e. generally towards a line running through the center of post 215), may also be applied to roller 240. The force is increased as the roller 240 moves in regions where reduced thickness of the rim 20 are desired. Alternatively, an elevational control may be used in which the elevation of the roller 240 is varied depending on the thickness desired. For example, when a reduced thickness region is being formed, the roller 240 is moved closer to mandrel surface 225 than when a larger thickness region is being formed. If needed, subsequent operations may also be performed in order to ensure that specific portions of the rim 20 (such as bead seats 50, 60) have the desired profiles.

In the shear forming process, a sideways displacement of material in the stretched region results in the reduced thickness section 110 being formed. The expected proportional change in thickness can generally be calculated in accordance with the following formula:

$$\sin(\text{angle of exit})/\sin(\text{angle of incidence})=$$

$$\text{expected percentage change of thickness.}$$

The angle of incidence is, for example, the angle formed between the inner surface 22 of the rim pre-form 100 and a line running parallel to the axis of rotation (i.e. running through the center of the center portion 30 and perpendicular to the plane defined by the axle receiving aperture 70) and the angle of exit is the angle formed between the inner surface of the formed rim 20 and the line running parallel to the axis of rotation. Using this example, if the angle of incidence is 16.5° and the angle of exit is 7.0°, then a 43% reduction in thickness can be expected.

Thus, it is seen that a method and apparatus for forming reduced thickness vehicle wheels is provided. One skilled in the art will appreciate that the present invention can be practiced by other than the preferred embodiments which are presented for purposes of illustration and not of limitation, and the present invention is limited only by the claims which follow.

## Claims

1. A method of manufacturing a vehicle wheel (10), the vehicle wheel (10) including a centre portion (30) defining an axle receiving aperture at its centre and a rim (20) having a first axial width measured between a first axial end and a second axial end wherein the rim has an inner surface, an outer surface and a region of reduced radial depth, wherein the radial depth is a distance between the inner and outer surfaces, the method comprising the steps of:

   providing an intermediate unit (120), the intermediate unit including the centre portion and a rim pre-form (100) having an inner surface, an outer surface and a second axial width which is smaller than the first axial width of the rim to be formed, wherein the centre portion is attached to the rim pre-form;
   mounting the intermediate unit (120) within a forming apparatus including mounting the centre portion on a first mandrel (210) wherein the centre portion is centred about an axis of rotation which axis is defined as extending perpendicularly from the centre of the wheel receiving aperture;
   retaining the centre portion in place on the first mandrel (210) so as to prevent any substantial movement therebetween; and
   forming the rim from the rim pre-form, including a step of reducing the radial depth of a portion of the rim.

2. The method of manufacturing a vehicle wheel as in claim 1, further comprising a step of providing a second mandrel (220) having a generally axially extending forming surface (225), the providing a second mandrel step being performed before the forming step.

3. The method of manufacturing a vehicle wheel as in claim 1, wherein the step of providing an intermediate unit further comprises:

   providing the centre portion (30);
   providing the rim pre-form (100); and
   fixedly attaching the centre portion to the rim pre-form.

4. The method of manufacturing a vehicle wheel as in claim 3, wherein said fixedly attaching step comprises welding the centre portion (30) to the rim pre-form (100).

5. The method of manufacturing a vehicle wheel as in claim 1, wherein said step of providing an intermediate unit comprises forming the centre portion and rim pre-form in one piece.

6. The method of manufacturing a vehicle wheel as in claim 1, wherein:

   the mounting step includes the step of centring the centre portion on the first mandrel (210); and
   the forming the rim step includes the step of maintaining the centre portion (30) in an orientation with respect to the rim formed as the centre portion had with the rim pre-form prior to the forming the rim step.

7. The method of manufacturing a vehicle wheel as in claim 1, wherein the step of mounting the intermediate unit (120) comprises the step of mounting the centre portion (30) on the first mandrel (210) wherein a mounting protrusion (215) extending from the first mandrel is inserted through the axle receiving aperture of the centre portion.

8. The method of manufacturing a vehicle wheel as in claim 2, wherein the step of forming the rim further comprises conforming the rim to the shape of the forming surface of the second mandrel (220).

9. The method of manufacturing a vehicle wheel as in claim 2, wherein the forming surface of the second mandrel (220) includes a bead seat forming surface and the step of forming the rim includes thinning the rim pre-form until a portion of the rim engages the bead seat forming surface.

10. The method of manufacturing a vehicle wheel as in claim 1 or claim 9, further comprising a step of:
   forming a rim pre-form (100) having a first axial end and a second axial end, before the step of providing an intermediate unit, including the step of forming a bead seat adjacent at least one of the first axial end and second axial end.

11. The method of manufacturing a vehicle wheel as in claim 2 wherein said retaining step comprises clamping the centre portion between the first mandrel (210) and the second mandrel (220).

12. The method of manufacturing a vehicle wheel as in claim 1, further comprising a step of providing a second mandrel (220) having a generally axially extending forming surface, the step of providing a second mandrel being performed before the retaining step.

13. A method of manufacturing a vehicle wheel (10), the vehicle wheel including a centre portion (30) defining an axle receiving aperture at its centre and a rim (20) having a first axial width measured between a first axial end and a second axial end wherein the rim has a region of reduced radial depth, comprising the steps of:

providing an intermediate unit (120), the intermediate unit including the centre portion and a rim pre-form (100) having an inner surface, an outer surface and a second axial width which is smaller than the first axial width of the rim to be formed, wherein the centre portion is attached to the rim pre-form; and
mounting the intermediate unit (120) within a forming apparatus including mounting the centre portion on a first mandrel (210) wherein the centre portion is centred about an axis of rotation which axis is defined as extending perpendicularly from the centre of the wheel receiving aperture.

14. The method of manufacturing a vehicle wheel as in claim 13, further comprising forming the rim from the rim pre-form, including a step of reducing the radial depth of a portion of the rim.

15. An apparatus for forming a vehicle wheel (10), the vehicle wheel including a generally disk shaped centre portion (30) defining an axle receiving aperture at its centre and a rim (20) having a first axial width measured between a first axial end and a second axial end, wherein the rim has an inner surface, an outer surface and a region of reduced radial depth, wherein the radial depth is a length between the inner and outer surfaces, the apparatus comprising:

means for mounting an intermediate unit (120) within the forming apparatus, wherein:
the intermediate unit (120) includes the centre portion and a rim pre-form having an inner surface, an outer surface and a second axial width which is smaller than the first axial width of the rim to be formed;
the centre portion is attached to the rim pre-form; and
the means for mounting includes a mandrel (210) that centres the centre portion about an axis of rotation which axis is defined as extending perpendicularly from the centre of the wheel receiving aperture;
means for retaining the centre portion in place on the mandrel (210) so as to prevent any substantial movement therebetween; and
means for forming the rim from the rim pre-form, including means for reducing the radial depth of a portion of the rim.

16. The apparatus for manufacturing a vehicle wheel as in claim 15, wherein the means for reducing the radial depth includes a spin forming means, a shear forming means or a means for spinning the mandrel.

17. The apparatus for manufacturing a vehicle wheel as in claim 15 or 16, wherein:

the means for mounting includes the means for centring the centre portion on the mandrel (210); and
the means for forming the rim includes the means for maintaining the centre portion in an orientation with respect to the rim formed as the centre portion had with the rim pre-form prior to the forming the rim.

18. The apparatus for manufacturing a vehicle wheel as in any one of claims 15 to 17 wherein the mandrel (210) includes a mounting protrusion (215).

19. The apparatus for manufacturing a vehicle wheel as in any one of claims 15 to 18, further comprising a forming mandrel (220) having a generally axially extending forming surface.

20. The apparatus for manufacturing a vehicle wheel as in claim 19 wherein the means for forming the rim further comprises means for conforming the rim to the shape of the forming surface (225) of the forming mandrel (220).

21. The apparatus for manufacturing a vehicle wheel as in claim 19 or 20 wherein the forming surface of the forming mandrel includes a bead seat forming surface.

22. The apparatus for manufacturing a vehicle wheel as in claim 19 wherein:

the forming surface of the forming mandrel (220) includes a bead seat stop surface; and
the means for forming the rim includes means for thinning a portion of the rim pre-form to axially stretch the rim until the bead seat engages the bead seat stop surface.

FIG. 2

FIG. 1

F I G. 3

F I G. 4

F I G. 5

EP 0 743 112 A1

FIG.6

FIG. 7

**European Patent Office**

**EUROPEAN SEARCH REPORT**

Application Number

EP 96 30 3365

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | GB-A-1 419 140 (GKN SANKEY LTD) 24 December 1975 | 1-4,6,8, 13-16 | B21D53/26 |
| A | * the whole document * | 17,19,20 | |
| X | DE-A-27 32 651 (KRONPRINZ AG) 25 January 1979 | 1,5-7, 13-16 | |
| A | * the whole document * | 18 | |
| X | EP-A-0 366 049 (ASAHI MALLEABLE IRON CO LTD) 2 May 1990 * figure 1 * | 1,2,5-9, 11-22 | |
| A | PATENT ABSTRACTS OF JAPAN vol. 015, no. 414 (M-1171), 22 October 1991 & JP-A-03 174932 (TOPY IND LTD), 30 July 1991, * abstract * | 1 | |
| A | JP-A-03 174 932 (TOPY IND LTD) 30 July 1991 * figures * | 1 | TECHNICAL FIELDS SEARCHED (Int.Cl.6)<br><br>B21D<br>B21H |

The present search report has been drawn up for all claims

| Place of search | Date of completion of the search | Examiner |
|---|---|---|
| THE HAGUE | 26 August 1996 | Ris, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)